# EUROPEAN PATENT APPLICATION

(11) **EP 1 168 854 A2**
(43) Date of publication of application: **02.01.2002**
(21) Application number: 01114982.0
(22) Date of filing: 20.06.2001
(51) Int. Cl.: H04Q 1/14, H05K 9/00

(54) **Modular expandible directional connection board**

(30) Priority: 21.06.2000 IT MI001403
(71) Applicant: CPE ITALIA S.P.A., 20157 Milano (IT)
(72) Inventor: Ciampichetti, Alberto, 20157 Milano (IT)
(74) Representative: Cicogna, Franco

(57) **Abstract**

A modular expandible bidirectional connection board comprises a plurality of ports, each of an average converting type, i.e. designed for individually coupling, through an impedance matching assembly, lengths of different transmissive media, the board being characterized in that it comprises a box-like construction, a casing (13) preferably made of a plastics material, including two casing portions, i.e. a front side (4) and a rear side (5), defining therebetween a chamber for housing an electronic card (6) and related components such as coaxial connector (15) N3 (1.0/2.3), three-way mini wire-wrap contacts (14) and the impedance matching elements (18).

## Description

### BACKGROUND OF THE INVENTION

The present invention relates to a modular expandible bidirectional connection board including a plurality of ports, each of an average converting type, i.e. designed for individually coupling, through impedance matching means, lengths with different transmissive media.

As is known, from the end of the past century and the start of this new age, the communication modalities have been greatly changed, both related to the telecommunication system construction and with reference to a daily use of the information technology, which has found such a broad diffusion that private users can be considered as one of the most important financial gain sources.

In this connection it is to be pointed out that the above mentioned revolution has achieved a quick diffusion through any human activity fields, even in those conventionally resisting against technologic innovations, and this without considering the economic-social phenomenon of the so-called "new economy".

The consequent quick increase of the digital and/or analogic communication networks, has stressed, for all the telecommunication and network system operators, an increasing importance of the telecommunication fields, in particular of the exponentially increasing Communications Interconnection Cabling field, which tends to solve all the problems inherent to possible effects on communication signals due to the interconnections of network lengths or portions.

Examples of the above mentioned effects comprise the well known signal attenuations or losses, frequency variations, distortions, leakages and so on, affecting the communication signals during the interconnections, which effects in turn affect and define the constraints the network specifications must meet, as the network designer designs the power budged of the communication network.

As is known, the communication channels typically comprise one or two communication ways, and can comprise communication networks proper such as the so-called WAN (Wide Area Networks), MAN (Metropolitan Area Networks) or LAN (Local Area Networks), which, in addition to the so-called DQDB (Distributed Queue Dual Bus) further comprises several topologies, such as the Ethernet and Token Ring.

Anyhow, independently from the network architecture, the communication channels, considered either individually or as a modular group, frequently comprise different technologies, even if the latter derives from International Standards.

An example of this is the simultaneous presence, in PCM protocol networks, which constitute near all the voice and data cable networks, of the European Standard of the E1 network lines and the US Standard of the T1 network lines, which, in an increasing degree, under the globalization effort, are necessarily combined.

On the other hand, even inside the same standard, the line lengths can be constituted by 75 Ω coaxial cables, or 120 Ω twisted-pair cables.

According to the T1 standard, the cables substantially comprise 100 Ω pair-cables.

At present, the transmission units of a PCM system, for example the transmitting unit of the Pan-European GSM mobile telephony communication systems, with respect to the ground units, use transmission cards including therein a circuit implementation of systems designed for applying the inlet signal, according to the desired levels, matched to any desired impedance level characterizing the starting transmission line cables, either an E1 line or a T1 line.

The requirements will grow up with the incipient diffusion of the third generation standard UMTS (Universal Mobil Telephon System), which will provide a world-wide multimedia technology convergence, by allowing transmission up to 2 Mbs, or 2 Megabits/s.

Accordingly, the present trend in designing cable network systems is that of developing connection constructions for providing a connection with on-board electronic systems, which is adapted to provide a network as flexible as possible.

However, up to now, no solution, valid both from an aspect of the size compatible with the enforcing standards, and from the aspect of the necessary independent individual lines and cost related to the market requirements, has been still designed.

### SUMMARY OF THE INVENTION

Accordingly, the aim of the present invention is to provide a modular expandible bidirectional connection board, including a plurality of ports, each of an average converting type, i.e. designed for individually coupling, through a full impedance matching means, lengths including different transmissive media, such as, by way of a non limitative example, the coaxial cables having an impedance of 75 Ω, with balanced cable (twisted-pair cables) of 120 Ω.

Within the scope of the above mentioned aim, a main object of the present invention is to provide such a modular board adapted to solve not only all the electronic problems related to the impedance matching between discrete media, but also the mechanical requirements related to a compaction of the apparatus, such as Private Telephonic Exchanges, Routers, Bridges, and so on, using the boards and which, as is well known, comprise coaxial outer interfaces, while meeting the size requirements of existing permutators, details of the IEEE and CCITT standards, also met by TELECOM, even if they at present include 2,4 or at a maximum 8 positions.

Yet another object of the present invention is to provide such a bidirectional coupling board including a 32-port strip, each port of which is designed for individually coupling, through a full impedance matching, lengths including different transmissive media such as a 75 Ω coaxial cable, and a balanced (twisted-pair) cable of 120 Ω, or a 100 Ω pair-cable, while meeting the standardized maximum size criteria, characterizing the TELECOM's strips.

An additional object of the invention is that of optimizing the mechanical aspect, by providing a targeted simplifying and a greater operating reliability and safety.

Yet another object of the present invention is to provide such a bidirectional connection modular and expandible board, including a plurality of ports, each of an average converting type, designed for individually coupling, through a full impedance matching, lengths with different transmission media, which board is very competitive from a mere economic standpoint.

According to one aspect of the present invention, the above mentioned aim and objects, as well as yet other objects, which will become more apparent hereinafter, are achieved by a modular expandible bidirectional connection board, including a plurality of ports, each of an average converting type, designed for individually coupling, through a full impedance matching, lengths with different transmissive media, characterized in that said board comprises a main box-like construction including a bottom and a clamping plate, defining a housing for an electronic card and related components for impedance matching, and a plurality of coaxial connectors N3 (1.0/2.3), and a corresponding number of three-way mini wire-wrap contacts.

### BRIEF DESCRIPTION OF THE DRAWINGS

Further characteristics and advantages of the present invention will become more apparent hereinafter from the following detailed disclosure of a preferred, though not exclusive, embodiment of a modular expandible bidirectional connection board, including a plurality of ports, each of an average converting type, designed for individually coupling, through a full impedance matching, a length with different transmissive media, and which is illustrated, by way of an indicative, but not limitative, example, in the figures of the accompanying drawings, where:

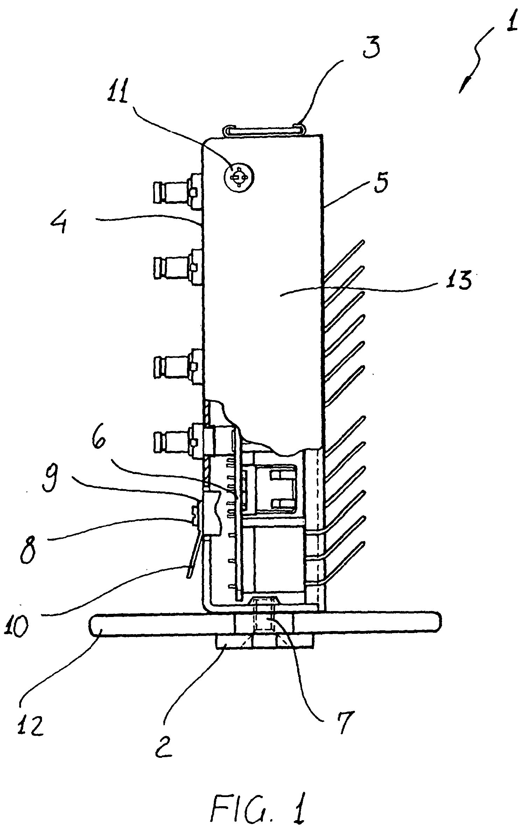

Figure 1 is a general side view, partially cross-sectioned, illustrating the coupling board, including impedance matching means for matching the impedances of different transmissive carriers, according to the present invention;

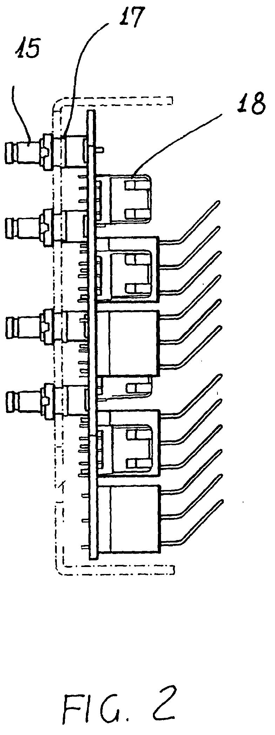

Figure 2 is a view analogous to that of figure 1 illustrating the board according to the present invention without the packaging and supporting elements therefor;

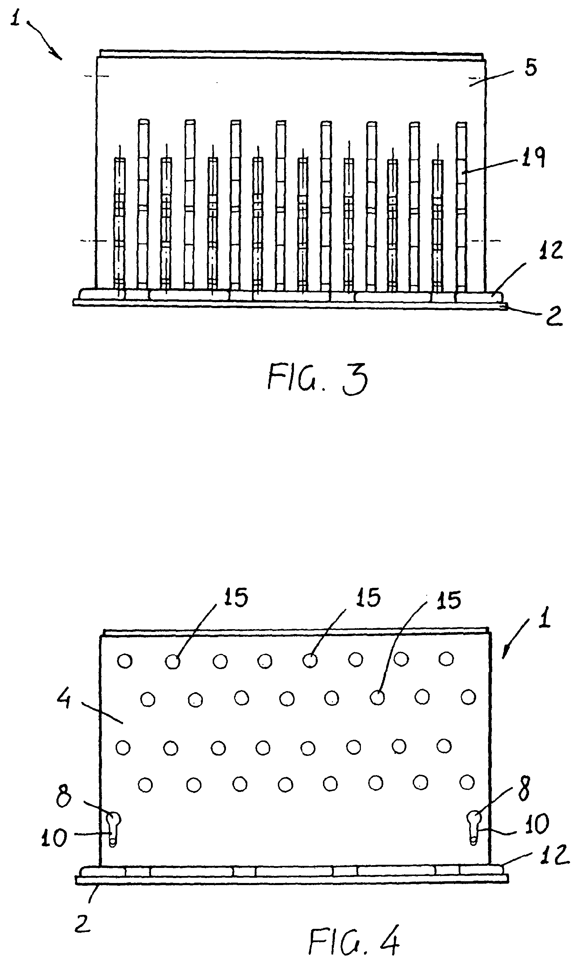

Figure 3 is a front view illustrating the rear portion (the 120 Ω balanced cable side) of the coupling board according to the present invention;
Figure 4 is a front view illustrating the front portion (the 75 Ω unbalanced cable side) of the coupling board according to the present invention.

### DESCRIPTION OF THE PREFERRED EMBODIMENTS

With reference to the number reference of the above mentioned figures, the modular expandible bidirectional connection board, including a plurality of ports, each of an average converting type, designed for individually coupling, through a full impedance matching, lengths with different transmissive media, according to the present invention, has been generally indicated by the reference number 1.

Said board comprises a main box-like construction or casing 13.

Said casing 13 is preferably made of a plastics material and has the 120 Ω side thereof, indicated by the reference number 5, and the 75 Ω side thereof, indicated by the reference number 4.

Said panel or device comprises moreover a bottom 12 and a clamping plate element 2.

The casing 13 defines a housing for an electronic card 6, and related electronic components, for providing the impedance matching and, on a side, comprises a plurality of coaxial N3 (1.0/2.3) connectors 15, whereas, on the other side, comprises a corresponding number of three-way mini wire-wrap contacts 14.

The casing 13 is clamped to said bottom 12 and fixing plate element 2, operating as supporting elements through a clamping means or screw 7.

Further securing and clamping constructional elements comprise the screws 11 coupling the casing to the circuit card 6.

The screws 8 operate to provide a shielding function, through the direct coupling of said screws to the general ground of the circuit and board.

On the outside of the front side 4 of the casing, are provided the lugs 10 and washers 9, with self-evident locking functions.

On the inner face of the side 4 of the casing, is provided a further spacer and locking elements for the coaxial connectors 15, which element comprise the washers 17.

On the casing 13 side diametrically opposite to the side thereof bearing on the bottom 12 is applied to a label holding element, which can receive therein a label bearing customizing information on the apparatus and/or information related to the maker or servicing operator of the connection panel.

Very important are in this case the impedance matches 18, which represent the electronic core of the apparatus.

From the above disclosure it should be apparent that the invention fully achieves the intended aim and objects.

In particular, the fact is to be pointed that a modular expandible bidirectional connection board including a plurality of ports, each operating as an average converter, i.e. for individually coupling, through a full impedance matching, lengths of different transmissive means, has been provided.

The subject connection board has been optimized in order to fully exploit the available space while meeting the size IEEE and CCITT requirements or standards, thereby allowing cable networks to be very simply intercoupled, within the requirement range of the mentioned standards, even of an equal or of a different type.

The invention, as disclosed, is susceptible to several modifications and variations, all of which will come within the scope of the invention.

Moreover, all the constructional details can be replaced by other technically equivalent elements.

In practicing the invention, the used materials, constructional details, as well as the contingent size and shapes, can be any, depending on requirements.

## Claims

1. A modular expandible bidirectional connection board, including a plurality of ports, each of an average converting type, designed for individually coupling, through a full impedance matching, lengths with different transmissive media, **characterized in that** said board comprises a box-like construction, a casing (13) preferably made of a plastics material, including two casing portions, i.e. a front side (4) and a rear side (5), defining therebetween a chamber for housing an electronic card (6) and related components such as coaxial connector (15) N3 (1.0/2.3), three-way mini wire-wrap contacts (14) and the impedance matching elements (18).

2. A connection board including a plurality of average converting ports and full impedance matching means, according to Claim 1, **characterized in that** said casing is fixed to casing supporting elements, i.e. a bottom (12) and a clamping plate (2), by a screw (7), and being made rigid with said electronic card (6) by further screws (11).

3. A connection board including a plurality of average converting ports and full impedance matching means, according to Claims 1 and 2,
**characterized in that** said screws (8) provide a clamping means, as well as a shielding means, by a direct coupling of said screws to the main ground of the circuit and board.

4. A connection board including a plurality of average converting ports and full impedance matching means, according to the preceding claims, **characterized in that** said casing comprises, outside of a front side (4) thereof, of 75 Ω, in addition to 32 coaxial connectors (15) constituting the information transit ways, or strip positions, cable lungs (10) and washers (9).

5. A connection board including a plurality of average converting ports and full impedance matching means, according to the preceding claims, **characterized in that** the 120 Ω size (5), forming a rear portion of said casing, comprises 32 channels of three-way mini wire-way contacts (14), balanced at 120 Ω, or for 100 Ω pair-cables.

6. A connection board including a plurality of average converting ports and full impedance matching means, according to the preceding claims, **characterized in that** said board provides a full impedance matching between a 75 Ω coaxial cable and a 120 Ω balanced cable, or a 100 Ω balanced cable, through impedance transformer means (18).

7. A connection board including a plurality of average converting ports and full impedance matching means, according to one or more of the preceding claims, and substantially as broadly disclosed and illustrated in the preceding disclosure and several figures of the accompanying drawings, constituting integrating parts of the present Industrial Invention Patent Application.
